# EUROPEAN PATENT SPECIFICATION

(11) **EP 2 519 113 B1**
(45) Date of publication and mention of the grant of the patent: **14.02.2018**
(21) Application number: 10841584.5
(22) Date of filing: 22.12.2010
(51) Int. Cl.: A23G 3/54, A23G 4/20, A23G 1/54, A23G 3/34, A23G 3/36, A23G 3/38, A23G 4/06

(54) **HARD AND CRUNCHY CONFECTIONARY COATING**
HARTER UND KNUSPRIGER SÜSSWARENÜBERZUG
ENROBAGE DE CONFISERIE DUR ET CROQUANT

(30) Priority: 30.12.2009 US 291094 P
(43) Date of publication of application: 07.11.2012
(73) Proprietor: Wm. Wrigley Jr. Company, Chicago, IL 60642 (US)
(72) Inventor: HASELEU, Andrea, Buckhurst Hill Essex 1G9 GLA (GB); BARKALOW, David G., Deerfield Illinois 60015 (US); ORR, Ulesses, Chicago Illinois 60619 (US); SOTO, Miguel A., Chicago Illinois 60633 (US)
(74) Representative: Campbell, Neil Boyd
(86) International application number: PCT/US2010/061726
(87) International publication number: WO 2011/082050

(56) References cited:
- EP-A1- 1 057 414
- WO-A1-2007/070061
- WO-A1-2008/100851
- WO-A1-2009/124067
- US-A1- 2004 086 615
- US-A1- 2005 079 245
- US-A1- 2007 048 418
- US-A1- 2007 141 198
- US-A1- 2007 184 149
- US-A1- 2007 218 165
- US-A1- 2009 099 129
- US-A1- 2009 214 698
- US-B1- 6 355 265
- US-B1- 6 586 023
- US-B1- 6 627 234

## Description

### BACKGROUND OF THE INVENTION

The present invention relates to a confectionary product with a hard and crunchy coating, and in particular, sugarless chewing gum products with a hard and crunchy coating containing erythritol.

Consumers like hard and crunchy confectionary coatings. The hard coating creates texture differences from a soft or chewy confectionary center. Ingredients in such coatings are broken down quickly during chewing as the coating breaks up and quickly dissolves to create a burst of flavor, cooling, and/or sweetness that is often desired by consumers. Consumers like to hear and feel a "crunch" when they bite into a coated confection. "Crunch" is an audio and tactile characteristic of a coated confection. Crunchiness is not the same as hardness. Crunchiness is related to brittleness. Typically the more hard and brittle a coating, the more crunchy. Coating hardness (also called firmness) is the resistance perceived as the coating is chewed. A coating can be hard without being crunchy. For example, a lollipop and a pressed tablet are hard confections, but neither is considered crunchy.

Confectionary centers, including chewing gums and candies, are frequently enclosed with hard or soft coatings. Coatings provide an opportunity for the manufacturer to vary product characteristics such as taste, appearance and nutritional value. Many traditional hard pan hard and crunchy coatings comprise sugar, but these unfortunately are cariogenic, i.e. cause or promote dental caries.

Dental caries is an infectious disease which damages the structure of teeth. Tooth decay, i.e. creation of cavities, is the consequences of caries. Non-cariogenic means not to create dental caries. Non-cariogenicity or "toothfriendliness" of a substance such as a saccharide or a saccharide derivative may be determined by means of intraoral pH telemetry such as used by Toothfriendly International, a non-profit organization. In a standard procedure, plaque pH is measured in at least four persons during and for 30 minutes after consumption of a substance to be tested with a plaque-covered electrode. Products which do not lower plaque pH below 5.7, under the test conditions, are considered to lack cariogenic potential. Therefore, there is a need for a suitable sugarless saccharide (i.e., erythritol) for use in coated confections which is non-cariogenic.

In recent years, efforts have been devoted to producing sugarless hard coatings for use in sugarless confectionary that would be non-cariogenic. Sugarless coatings, which have been investigated, include coatings containing polyol compounds such as maltitol, xylitol, sorbitol, mannitol, and isomalt. The two most common coating polyols are maltitol and xylitol because both create sugar-free hard and crunchy coatings under reasonable process conditions. Though non-cariogenic, these coatings create gastrointestinal disturbance (i.e., laxation). Typically, a material is considered not to cause gastrointestinal disturbances (e.g., non-laxative), if such material is either substantially absorbed before entering the large intestine or passes through the large intestine substantially unchanged. In the quantities present in confections, erythritol meets such criteria. Therefore, there is a need for a suitable sugarless saccharide, such as erythritol, for use in coated confections, which does not cause gastrointestinal disturbances, but does create a hard and crunch coating.

Further, today consumers desire healthy snacks and food products. One ingredient that has been gaining popularity is inulin, which is a dietary fiber. However, inulin is a highly water soluble, long chain polysaccharide that is typically used to hold moisture in a confectionary product, such as with a chewy candy. Thus, the use of inulin would not be expected to aid in producing a hard and crunchy confectionary coating.

Erythritol is a rapid crystallizing saccharide and has a much faster crystallization rate than maltitol, xylitol, isomalt, sorbitol, and mannitol. This affects the coating process, including process temperature, process time, syrup concentration, and syrup ingredients. Substitution of erythritol into a maltitol coating process results in clogged application pipes and spray nozzles and uneven and/or softer coating.

The hardness and crunchiness of coatings is dependent on several factors, including the size and homogeneity of saccharide crystals, the hardness of the crystals, how compact the crystals are in the coating, and the bonding between the crystals. If the sweetener syrup crystallizes very fast, then there is a lower possibility that there was enough time to grow the crystals to a proper size and hardness, and with a sufficient compactness to create a hard crystal mass formation that is brittle and therefore will be crunchy. It is more likely that very small crystals develop in a loose formation or that several larger crystals exist, but are not bonded to each other. Both situations lead to a coating being soft.

Sugarless coatings have been attempted with erythritol, which is non-cariogenic and non-laxative, with limited success due to erythritol's rapid crystallization and resultant solubility properties.

EP1057414 discloses a sugar-free hard coating prepared from a liquid coating syrup comprising a mixture of sorbitol and erythritol. At least one layer of the hard coating comprises 1 to 50 wt% erythritol on a dry basis.

WO2008/100851 discloses coated confectionary products which comprise a confectionary center and a coating which includes erythritol and an anti-crystallizing agent.

WO2007/070061 discloses coated chewing gum products. The coating includes a single polyol and is essentially free of any other polyols.

US2007/0218165 discloses confectionary compositions having a confectionery center surrounded by a coating containing a nanomaterial.

None of these references describe a coating composition which includes both erythritol and inulin.

The problem in creating a hard and crunchy erythritol pan coating, is that when using erythritol in a traditional panning formula and process, erythritol clogs application pipes and spray nozzles and gives an uneven and soft coating texture due to erythritol's fast crystallization rate.

Therefore, there is a need for a confectionary coating for use in coating confectionary centers, such as a chewing gum and candy, which is sugarless, does not create gastrointestinal disturbances, is non-cariogenic, while possessing an a commercially acceptable hard and crunchy coating.

### SUMMARY OF THE INVENTION

The invention provides a confectionary product comprising a confectionery center coated with a coating formed from erythritol, inulin and a film forming agent, wherein the amount of erythritol in the coating is 65-95 dry solids wt.% and wherein the amount of inulin in the coating is 3-13 dry solids wt.%. The invention also provides a method of making a coated confectionary product according to the invention, comprising:
a) applying a first syrup to a confectionary center comprising erythritol and inulin having a Brix of 60 to 68 at a temperature of 70 to 90 °C; and
b) applying a second syrup comprising erythritol and inulin with a Brix of 58 to 65 at a temperature of 70 to 90 °C to the confectionary center wherein the first and second syrups are different.

### DETAILED DESCRIPTION OF THE INVENTION

The present invention is directed to coated confectionary products and methods of making coated confectionary products, the coatings of which are both hard and crunchy and which do not include sugars that are cariogenic or sugar alcohols which cause laxation. Particular uses of such coatings are for coated chewing gum and coated chewy candies. Erythritol is a component in a confectionary coating to make a sugarless, non-cariogenic, and non-laxative coating that is hard and crunchy.

Consumers like to hear and feel a "crunch" when they bite into coated confectionary products. The crunch is a combination auditory and tactile sensation. Crunch is what the consumer hears and feels as they bite into a coated product. Crunchiness is not the same as hardness. Hardness is a purely physical characteristic of the product as the product is bitten into and chewed. Crunchiness is related to brittleness. The perception of the breakage of the coating will be influenced by the texture of the center. If the confectionary center is softer than the coating, then the consumer will hear and feel the breaking of the coating as teeth push through and into the center. The softer the center, the harder the coating can be perceived to be. The formulations and processes of this invention create confectionary coatings which have commercially acceptable hardness and crunchiness.

The hard and crunchy coatings of this invention comprise erythritol, inulin, and a film forming agent. The bulk of the hard and crunchy coating is a saccharide crystallizing agent including erythritol, which crystallizes out of solution and creates a hard and crunchy coating as the coating syrup is applied to a confectionary center during a coating process. A rapid crystallizing saccharide crystallizes faster than xylitol. A preferred rapid crystallizing saccharide is non-carriogenic and non-laxative.

Erythritol is a four-carbon sugar alcohol typically produced from glucose by fermentation with the yeast, *Moniliella pollinis.* Erythritol is absorbed into the bloodstream in the small intestine. Because erythritol is absorbed before it enters the large intestine, it does not normally cause the laxative effects that are often experienced with consumption of other polyols, such as sorbitol, maltitol, and xylitol. Further, typically erythritol cannot be metabolized by oral bacteria, so it does not contribute to tooth decay. However, application of erythritol-containing syrup onto a confectionery body is difficult because erythritol crystallizes more rapidly than other sugar alcohols.

Incorporation of known crystallization inhibitors such as calcium carbonate into an erythritol syrup has been found not to produce a satisfactory coating medium, because erythritol clogs application pipes and spray nozzles and gives an uneven and soft coating texture due to erythritol's fast crystallization rate. Crystallization inhibitors can also inhibit crystal growth and bonding between crystals, resulting in a coating that is not hard and crunchy.

Typical hard coating processes include the application of a saccharide application syrup to a confectionary center's surface. The saccharide syrup application is in small amounts, or aliquots, and time is given to allow the applied amount of syrup to crystallize and dry (i.e., water evaporate) before another amount of syrup is added. If not enough moisture is evaporated before a subsequent layer is added, water can be caught in the layers of the coating, which can create a softer coating. By this process, the layers build to the thickness of interest to the developer. The application of a subsequent amount of syrup to the surface wets the layer previously applied, which could cause already formed crystals to dissolve. Likewise, the crystals formed in a lower layer act as nuclei for crystal growth with the new syrup application layer. The new addition of syrup can further grow the crystals already present instead of creating more crystals.

A challenge with erythritol is that when used as other polyols are used in coating, erythritol's unusually fast crystallization rate can cause the erythritol to crystallize in its syrup form even before it is applied onto the confectionary surface, clogging pipes and spray nozzles. Also syrup that does exit the spray nozzles can crystallize so quickly that the syrup crystallizes as it travels to the surface of the confectionary centers, depositing crystals instead of syrup on to the surface of the centers. Erythritol can crystallize so quickly that syrup will not spread over the surface of the center, but will crystallize as it hits the surface. These conditions can cause large crystals with limited coverage of the surface and limited bonding between the crystals, which would cause a soft coating with little crunch.

Two challenges are created by the fast crystallization of erythritol: keeping erythritol syrup from crystallizing before reaching confectionary center's surface, and creating an even and dense crystal layer over the surface of the confectionary center in order to have a hard and crunchy coating.

The first challenge is met in this invention by elevating and maintaining the temperature of the application syrups. Typically maintaining the temperature is accomplished by insulating spray system piping and nozzles and maintaining heated air flow in the drying chamber. The erythritol is kept in solution until it was on and coating the confectionary center's surface. Unfortunately, high temperatures cause faster water evaporation, causing faster crystal growth. High temperatures also cause lower syrup viscosity which negatively effects syrup spread over center's surface. A balance was found with a syrup temperature of 70 to 90 °C.

The second challenge is met in the invention by adjusting the concentration of the crystallizing erythritol along with the concentrations of the film forming agent (e.g. gum tahla) and addition of a viscosity increasing agent (inulin). An unexpected combination was found of gum tahla and inulin that allowed optimum coverage allowing optimum crystal formation and growth for a hard and crunchy coating. The need was to get the correct syrup viscosity in order to get the necessary spray properties and surface spread properties at the high application temperature via a combination of erythritol, a viscosity increasing agent such as inulin, and a film forming agent such as gum tahla, which would create a hard and crunchy coating without difficulties in processing (e.g., no clogging or uneven coating).

A film forming agent can be added to saccharide coating syrups to perform several functions. The film forming agent helps reduce syrup layer tension, so that the syrup can more easily be distributed over the surface of a confectionary center. The film forming agent also helps knit, or glue, the syrup crystals together, which aids in creating a more compact structure, which helps to improve hardness. Gum tahla, also called gum arabic or gum acacia, is a film forming agent that can be added to saccharide coating application syrups. Thus, a film forming amount of gum tahla may be added to the syrups used to form coatings in this invention. However, the amount of gum tahla that can be usefully added is limited in that gum tahla may physically interfere with saccharide crystal growth which will cause coating softness. Further, gum tahla may glue the crystals together to create a hard, non-brittle layer, which would not be crunchy. Also, concentrated, wet gum tahla solution is inherently sticky. Coated pieces sticking to each other can occur when centers do not dry correctly and wet syrup coated surfaces touch during processing.

A viscosity increasing agent may be added to a saccharide coating syrup in order to create greater viscosity within a low concentration saccharide syrup that would allow the flow of the syrup around the coating confectionary center surface, which is a necessary property for creating a hard and crunchy coating. The slow flow of the syrup over the confectionary center surface gives more time for crystal growth. Inulin is a viscosity increasing agent that can be added to saccharide coating application syrups.

In the present invention inulin is included within the coating composition as a means to increase the erythritol application syrup viscosity without interfering with erythritol crystal growth. This is contrary to convention, in which ingredients (e.g. anticrystallizing agents) are added to interfere with, and thus slow, erythritol crystal growth.

Inulin unexpectedly uses its water binding property to create a hard confectionary coating. Typically, inulin is used in confections to create a moist and chewy product by binding water and keeping the confection from drying out and becoming hard. In the current coating application, inulin slows down the recrystallization rate of erythritol as it keeps water in the application syrup longer as the syrup is applied to centers. Because the erythritol molecules are longer in syrup form, they have longer time available for crystal formation. The erythritol crystals have a chance to create crystals of a proper size with the preferred hardness character.

Inulin is composed of linear chains of fructose units linked by β (2→1) bonds and is often terminated by a glucose unit. Suitable inulins useful in this invention typically contain chains of around 3 to 60 fructose units. Inulin sources contain polymers in a distribution of chain lengths, which are described by their DP (number of sugar units). Typically short chain inulin has DP<20 and long chain inulin has DP>20. Typically, inulin material is in a long chain form, though other length variations are available. A typical long chain inulin source, such as Beneo HP inulin supplied by Orafti, has an average DP>23, creating an inulin material with long polymer chains. A typical short chain inulin source, such as DeSugar Inulin supplied by Cargill, has an average DP = 10, creating a inulin material with short polymer chains. Inulin has a minimal impact on blood sugar and does not raise blood triglycerides, making it generally considered suitable for diabetics.

Inulin does not contribute to dental caries as it is not metabolized by bacteria in the mouth. Inulin does not cause gastrointestinal disturbances in the amounts used in confectionary coatings, because of its limited digestibility.

Erythritol is less soluble than other polyols used in creating hard confectionary coatings, such as xylitol and maltitol. Erythritol has a solubility of 61g/100 ml at 25°C. Xylitol has a solubility of 200g/100 ml at 25°C. Maltitol has a solubility of 175 g.100 ml at 25°C. That means that when erythritol is used in coating, it has a lower concentration in comparison with these polyols at the same process temperature. At its lower syrup concentrations, erythritol creates a thinner syrup than with most polyols at the same temperature. Typically, the lower the concentration of the syrup, the longer the coating process time due to longer evaporation times and more application aliquots needed to build up coating mass. That leads to more time for complications to occur (e.g. clogging, browning, uneven application). To at least partially compensate for the lower saccharide solubility, the processing temperature is raised to allow for a higher syrup concentration to be made.

Another challenge with erythritol is that erythritol is more endothermic than other polyols, that is, erythritol solutions quickly cool as the erythritol crystallizes in the syrup. Erythritol has a heat of solution of -42.9 cal/g. Xylitol has a heat of solution of -36.6 cal/g. Maltitol has a heat of solution of -5.5 cal/g. This makes the erythritol syrup prone to cool as the erythritol starts to crystallize in the syrup, which then causes the syrup temperature to drop, causing more erythritol to crystallize. Also, as crystals form, free water is freed for evaporation, which then concentrates the syrup even more.

The hardness and crunchiness of coatings depends on several factors, including the size and homogeneity of saccharide crystals, the hardness of the crystals, how compact the crystals are in the coating, and the bonding between the crystals. If the sweetener syrup crystallizes very fast, then there is a lower possibility that there was enough time to grow to a proper size and hardness, and with a sufficient compactness to create a hard crystal mass formation, which is brittle and so will be crunchy. It is more likely that very small crystals develop in a loose formation or that several larger crystals exist, but are not bonded to each other. Both situations lead to a coating being soft. If the saccharide crystals are too heavily glued together by film forming agent, then the coating will be hard, but not brittle, so not very crunchy.

In confectionary products according to the invention the amount of erythritol in the coating is 65-95 dry solids wt.%. Typically hard and crunchy coating syrup formulations contain 70 to 90 dry solid wt.% erythritol in combination with a viscosity increasing amount of inulin and a film forming amount of gum tahla. Inulin is present in an amount of 3-13 dry solids wt.%, which increases the viscosity of an erythritol syrup to permit flow of the syrup around a confectionery center and to create crystals with suitable hardness. A film forming agent such as gum tahla is present in an amount to promote adhesion among erythritol crystals to create a more compact structure to improve hardness, but less than an amount which interferes with crystal growth which causes coating softness. Typically, a film-forming amount is 7 to 14 dry solids wt.% of a coating syrup.

Saccharide application syrups contain water and dry solids. The composition of the solids (in the syrup and/or coating) is described in dry solids weight percent. The amount of total solids in water is measured by a number on a Brix scale as read on a refractometer. The Brix scale relates to the percentage by weight of sucrose solids in water. A 65 Brix would represent a solution that is 65 % sucrose and 35 % water. Brix reading can be used to measure solids other than pure sucrose as an indice representing apparent solids. Thus, Brix reading is normally used to obtain the corresponding specific gravity or refractive index of a solution that is agreed to correspond to a solution of pure sucrose and water at a set reference temperature. In the current case, the Brix reading is used to measure the refractive index of the application syrup at the application temperature. The greater the amount of solids, the greater the Brix reading.

An aspect of this invention is a confectionary product, which has a confectionary center and a hard and crunchy confectionary coating, in which the confectionary coating comprises 70 to 90 dry solids wt. % erythritol, 4 to 12 dry solids wt. % inulin, and 9 to 13 dry solids wt. % film forming agent.

An aspect of this invention is a confectionary product, which has a confectionary center and a hard and crunchy confectionary coating, in which the confectionary coating comprises 70 to 90 dry solids wt. % erythritol, 4 to 12 dry solids wt. % inulin, and 9 to 13 dry solids wt. % gum tahla.

Another aspect of this invention is a confectionary product, which has a confectionary center and a hard and crunchy confectionary coating, in which the confectionary coating comprises 70 to 90 dry solids wt. % erythritol and 4 to 12 dry solids wt. % inulin.

Another aspect of this invention is the method of making a confectionary coating comprising 70 to 90 dry solids wt. % erythritol, 4 to 12 dry solids wt. % inulin, and 9 to 13 dry solids wt. % gum tahla by applying at least one application syrup at 58 to 64 Brix.

Another aspect of the invention is a non-cariogenic, non-laxative hard and crunchy confectionary coating process comprising the steps of making a first section of the confectionary coating with a first syrup, comprising erythritol, inulin and a film forming agent, having a Brix of 60 to 68 at a temperature of 70 to 90 °C, and a dry powder, comprising erythritol; and then making a second section of a confectionary coating using a second syrup, comprising erythritol, inulin and a film forming agent, having a Brix of 58 to 65 at a temperature of 70 to 90 °C.

Another aspect of the invention is a confectionary coating process comprising the steps of making a first section of a hard and crunchy confectionary coating with a first syrup, comprising erythritol and inulin at a Brix of 60 to 68, and a dry powder, comprising erythritol; and then making a second section of a confectionary coating using a second syrup, comprising erythritol and inulin at a Brix of 58 to 65.

Another aspect of the invention is a method of making a coated confectionary product, comprising applying a first syrup to a confectionary center comprising erythritol and inulin having a Brix of 60 to 68 at a temperature of 70 to 90 °C; applying a powder comprising erythritol to the confectionary center; and then applying a second syrup comprising erythritol and inulin with a Brix of 58 to 65 at a temperature of 70 to 90 °C to the confectionary center.

Another aspect of the invention is a method of making a coated confectionary product, comprising applying a first syrup to a confectionary center comprising erythritol, inulin, and gum tahla having a Brix of 60 to 68 at a temperature of 70 to 90 °C; applying a powder comprising erythritol to the confectionary center; and then applying a second syrup comprising erythritol, inulin, and gum tahla with a Brix of 58 to 65 at a temperature of 70 to 90 °C to the confectionary center.

Another aspect of the invention is a confectionary coating process comprising the steps of making a first section of a hard confectionary coating with a first syrup, comprising erythritol, inulin, and gum tahla, and an erythritol powder, comprising erythritol; and making a second section of a confectionary coating using a second syrup, comprising erythritol, inulin, and gum tahla.

Another aspect of the invention is a process of making a confectionary coating comprising 70 to 90 dry solids wt. % erythritol and 4 to 12 dry solids wt.% inulin, wherein the process comprises the steps of creating a first syrup of 75 to 90 dry solids wt. % erythritol and 9 to 14 dry solids wt. % inulin; applying the first syrup to a confectionary center surface in several small aliquots, wherein a powder comprising erythritol is added during the first third of the first syrup aliquot additions; drying the syrup that is on the center surface between each first syrup aliquot or each first syrup aliquot and powder addition; creating a second syrup of 75 to 90 dry solids wt. % erythritol and 6 to 10 dry solids wt. % inulin; applying the second syrup to the confectionary center surface in several small aliquots; and drying the syrup that is on the center between each second syrup aliquot addition.

Another aspect of the invention is a process of making a confectionary coating comprising 70 to 90 dry solids wt% erythritol, 4 to 12 dry solids wt. % inulin, and 9 to 13 dry solids wt. % gum tahla, wherein the process comprises the steps of creating a first syrup of 75 to 90 dry solids wt. % erythritol, 9 to 14 dry solids wt. % inulin, and 9 to 14 dry solids wt. % gum tahla; applying to a confectionary center the first syrup in several small aliquots, wherein a powder comprising erythritol is added during the first third of the first syrup aliquot additions; drying the syrup that is on the center between each first syrup aliquot and first syrup aliquot and powder addition; creating a second syrup of 75 to 90 dry solids wt. % erythritol, 6 to 10 dry solids wt. % inulin, and 7 to 13 dry solids wt. % gum tahla; applying to the confectionary center the second syrup in several small aliquots; and drying the syrup that is on the center between each second syrup aliquot addition.

Another aspect of the invention is a confectionary product comprising a confectionery center coated with a coating produced with a first syrup comprising erythritol, inulin, and gum tahla at 60 to 68 Brix applied to confectionary center at 70 to 90 °C, and then a second syrup comprising erythritol, inulin, and gum tahla at 58 to 65 Brix applied to the confectionary center at 70 to 90°C.

Another aspect of the invention is a process of making a confectionary coating comprising 75 to 90 dry solids wt. % erythritol, 4 to 12 dry solids wt.% inulin, and 9 to 13 dry solids wt.% gum tahla, wherein the process comprises the steps of creating a first syrup of 75 to 90 dry solids wt. % erythritol, 9 to 14 dry solids wt. % inulin, and 9 to 14 dry solids wt. % gum tahla; applying the first syrup to a confectionary center at a Brix of 60 to 68 at 70 to 90 °C in several small aliquots, wherein a powder comprising erythritol is added during the first third of the first syrup aliquot additions; drying the syrup that is on the center between each first syrup aliquot and first syrup aliquot and powder addition using a air; creating a second syrup of 75 to 90 dry solids wt. % erythritol, 6 to 10 dry solids wt. % inulin, and 7 to 13 dry solids wt. % gum tahla; applying the second syrup to the confectionary center in several small aliquots at a Brix of 58 to 65 at 70 to 90 °C (i.e. 158 to 194°F); and drying the syrup that is on the center between each second syrup aliquot addition.

An aspect of the invention is a process of making a confectionary coating comprising 75 to 90 dry solids wt. % erythritol, 4 to 12 dry solids wt. % inulin, and 9 to 13 dry solids wt. % gum tahla, wherein the process comprises the steps of creating a first syrup of 75 to 90 dry solids wt. % erythritol and 9 to 14 dry solids wt. % inulin; applying the first syrup to a confectionary center at a Brix of 60 to 68 at 70 to 90 °C in several small aliquots, wherein a powder comprising erythritol is added during the first third of the first syrup aliquot additions; drying the syrup that is on the center between each first syrup aliquot and first syrup aliquot and powder addition using a air; creating a second syrup of 75 to 90 dry solids wt. % erythritol and 6 to 10 dry solids wt. % inulin; applying the second syrup to the confectionary center in several small aliquots at a Brix of 58 to 65 at 70 to 90 °C (i.e. 158 to 194°F); and drying the syrup that is on the center between each second syrup aliquot addition.

One purpose of the addition of the first application syrup is to add bulk to the coating. One purpose of the addition of the second application syrup is to smooth out the coating, bond the crystals together, and complete the addition of bulk to the coating. Both layers give hardness and crunch to the coating. In an aspect of this process, the erythritol is at a higher concentration in the first application syrup than in the second application syrup.

One purpose of the erythritol powder addition to the early added aliquots of the first solution is to initiate crystallization in a controlled manner. Elevating the application syrup to prevent unwanted erythritol crystallization in pipes and nozzles, hinders crystal growth initiation. Low syrup concentration additionally inhibits crystal growth initiation. The erythritol in the powder creates nucleation sites for faster and more even crystal growth. Also any erythritol that becomes dissolved in the application syrup as it is applied would raise the erythritol concentration of that syrup, which would additionally encourage crystallization of the erythritol. In some embodiments the level of erythritol added as dry powder during the first syrup application is 1 to 5 dry solids wt. % of the entire coating, preferably 2 to 4 dry solids wt. % of the entire coating.

With the small amount of erythritol powder added during application of the first saccharide application syrup and inulin in the first application syrup, the erythritol crystallization rate can be controlled to ensure that there is homogeneity of the erythritol crystals in the developing coating. With a slower and better distribution of the wet layer of the syrup over the center surface, there exists a higher possibility that each layer is close to, and more compact with, the previously applied layer. Also, with a syrup at a higher viscosity and higher dry solids, the possibility is reduced that the new syrup addition will dissolve the previous, already crystallized layer. There is more time (due to inulin), to develop well glued layers of erythritol crystals with gum tahla, without needing to use too much gum tahla.

The coating of this application is applied to a confectionary center. Confectionary products useful as centers in this invention preferably are chewing gums, but may be other food products in the form of jelly candies, pressed tablets, mints, chewy candies, hard boiled candies, chocolates, gummy candies, nougats, licorice, taffy, gels, solid foam, crystallized pastes, or combination thereof.

A confectionary coating composition typically contains a water-soluble saccharide portion, and optionally flavoring, coloring and sensate ingredients.

In an aspect of this invention, a confectionery center is a chewing gum in a form of pellets, dragees, chicklets, batons, balls, molded shapes or combinations thereof. As used herein, the term "chewing gum" also includes bubble gum and confectionery products containing chewing gum. Unless otherwise specified, all percentages used herein are weight percents.

A typical chewing gum center contains a "bulking agent", which means the water-soluble components of a chewing gum, but not including flavors, high intensity sweeteners, colors, sensates, or encapsulated materials. A typical chewing gum composition contains up to 95 wt. % bulking agent. The function of the bulking agent is to provide volume to the gum mass and to act to transport at an acceptable rate water-soluble flavors, sweeteners, and sensate agents within a person's mouth throughout the chewing process. Conventional bulking agents, such as sucrose, dissolve during the chewing process at a rate such that flavors, sweeteners, and sensate agents are delivered throughout a typical chewing time.

The water-soluble portion of a chewing gum typically also includes non-bulking agents, such as high intensity sweeteners, flavoring agents and combinations thereof. In the current invention, the bulking agent may constitute between 75% to 99% of the water soluble portion.

Insoluble gum base materials typically contain food-compatible elastomers, resins, fats and oils, waxes, softeners, and inorganic fillers. Elastomers may include polyisobutylene, isobutylene-isoprene copolymer (butyl rubber) and styrene butadiene rubber, as well as natural latexes such as chicle. Resins include polyvinylacetate and terpene resins. Fats and oils also may be included in the gum base, including tallow, hydrogenated and partially hydrogenated vegetable oils, and cocoa butter. Commonly employed waxes include paraffin, beeswax, and carnauba. The insoluble gum base typically constitutes 5 to 95 wt. % of the gum (preferably 15 to 60 wt. %) of the gum. The gum base typically also includes an inorganic filler component, such as calcium carbonate, magnesium carbonate, talc, dicalcium phosphate, or the like. The filler typically constitutes between 5 wt.% and 60 wt.%, preferably 5 wt. % to 50 wt. %, of the gum base.

Softeners are added to the chewing gum in order to optimize the chewability and texture of the gum. Softeners, also known in the art as plasticizers or plasticizing agents, generally constitute up to 15 wt. % of the chewing gum. Softeners contemplated for use in the present invention include glycerin, lecithin and combinations thereof.

Gum bases also may contain other softeners, including glycerol monostearate and glycerol triacetate. Further, gum bases may also contain optional ingredients such as antioxidants, colors, and emulsifiers. A chewing gum of the present invention typically may include any commercially-acceptable gum base.

The previously described materials may readily be incorporated into a chewing gum composition. Other conventional gum ingredients may be used in the present invention.

In general, chewing gum is manufactured by first melting the gum base and adding it to the preheated running mixer. The base may also be melted in the mixer itself. Color or emulsifiers may also be added at this time. A softener such as glycerin may also be added at this time, along with any syrup and a portion of the bulking agent and sweetener. After some agitation, the remaining bulking agent and sweetener are added to the mixer, in portions or all at once. Any additional ingredients are typically added with the final portion of bulking agent. Mixing occurs until degree of consistency is reached. Those skilled in the art will recognize that variations of the above procedure may be followed, for example, the mixer could be continuous and the components could be added in different orders.

The confectionary coatings of this invention typically contain, in addition to erythritol, inulin and a film forming agent, one or more additional ingredients such, for example, high intensity sweeteners, flavors, sensates, colors, actives and medicants. Such ingredients can be added in a free form or may be of an encapsulation, compaction, granulation and agglomeration to provide, for example, protected and longer-lasting ingredient components such as flavors, high intensity sweeteners, and sensates.

The bulk of the coating of this invention is erythritol, which crystallizes out of solution and creates a hard and crunchy coating as a coating syrup containing the saccharide crystallizing agent is applied to a confectionary center during a coating process. Additional crystallizing agents which may be used in addition to erythritol are water soluble saccharides with a water solubility of less than 150 g/100 ml at 25 °C and a heat of solution of less than -38 cal/g.

Typically, polyols are used for making sugarless coatings. Polyols such as maltitol and xylitol are more typically used to create sugarless coatings. These polyols are non-cariogenic, but are not non-laxative. Due to the unique crystallization properties of erythritol, just switching erythritol into the processes and formulas commonly used to make maltitol coatings, does not make an acceptable hard and crunchy coating.

Depending on the particular sweetness profile preferred in the confectionary coating a combination of coated and uncoated high intensity sweeteners can be added to the coating syrup. The sweetener amount may be present in the coating in the amount within the range from 0.01 wt. % to 50.0 wt. %. A non-limiting listing of sweeteners contemplated by the present invention include, but are not limited to, sucralose, neotame, aspartame, solds of acesulfame, alitame, saccharin and its salts, cyclamic acid and its salts, stevioside, glycyrrhizin, dihydrochalcones, thaumatin, monellin, Lu Han Guo, and the like, and combinations thereof. In order to provide a longer lasting sweetness and flavor sensation, such sweeteners may be encapsulated or otherwise in a form to provide a controlled release of at least a portion of the high intensity sweetener.

A flavoring agent may be present in the confectionary coating in an amount within the range of from 0.1 wt. % to 10 wt. %, and preferably from 0.5 wt. % to 5.0 wt. %, of the coating. The flavoring agents may comprise essential oils, synthetic flavors, or mixture thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorially acceptable blend. All such flavors and flavor blends are contemplated by the present invention.

### EXAMPLES

The following examples and comparative runs illustrate, but do not to limit, this invention.

A goal of present invention was to create a erythritol coating formulation and process with a hardness and crunchiness similar to, or greater than, that of traditional maltitol and xylitol coatings. When erythritol was substituted for maltitol in a maltitol coating formula and process, the pipes and spray nozzles clogged and a finished coated product was not possible.

Coated chewing gums with coatings containing erythritol, maltitol, or xylitol: formulas for runs 1 - 4 are listed in Table 1.

**Table 1 - Coated Chewing Gums with Erythritol, Maltitol, or Xylitol - Coating Formulas Runs 1-4:**

| Examples/Runs | 1 | 2 | 3 | 4 |
|---|---|---|---|---|
| **Syrup One** | | | | |
| Ingredients (dry solids wt.% of the syrup): | | | | |
| Xylitol | | | 86.9 | |
| Maltitol | 87.6 | | | |
| Erythritol | | 80.3 | | 79.7 |
| Gum tahla | 10.7 | 10.4 | 12.4 | 12.2 |
| Inulin | | 7.8 | | 7.8 |
| | | | | |
| Dry powder maltitol or erythritol (dry solids wt. % of the full coating) | 12.2 | 2.7 | | 2.7 |
| Physical Characteristics: | | | | |
| Brix | 73 | 64 | 74 | 64 |
| Temperature | 75 | 85 | 75 | 75 |
| | | | | |
| **Syrup Two** | | | | |
| Ingredients (dry solids wt.% of the syrup): | | | | |
| Xylitol | | | 94.7 | |
| Maltitol | 93.1 | | | |
| Erythritol | | 78.9 | | 79.5 |
| Gum tahla | 5.6 | 10.9 | 4.3 | 10.6 |
| Inulin | | 8.2 | | 8.0 |
| | | | | |
| Physical characteristics: | | | | |
| Brix | 72 | 62 | 70 | 60 |
| Temperature | 75 | 85 | 75 | 75 |
| | | | | |
| Gum Center Type: | C | B | C | A |

Each of the coating formulas in Table 1 additionally included minor amounts of the following ingredients: colors, flavors, sensates, and high intensity sweeteners. Following a traditional process for maltitol coating, the maltitol coating was produced with the large amount of dry maltitol addition with the first syrup addition. Maltitol crystallizes slowly and the addition of dry maltitol speeds up the coating process. Following a traditional process for xylitol coating, the xylitol coating was produced without a dry xylitol addition with the first syrup application. Xylitol crystallizes more quickly than maltitol and can self nucleate, so does not need the powder addition

Coating syrups of the above runs were used to coat chewing gum centers listed in Table 2. Since sorbitol is the least expensive polyol, sorbitol chewing gum centers are usually used with sugar free coatings. Sorbitol centers were used with runs 1 and 3 to mimic what is usually sold in the commercial market. Runs 2 and 4 used erythritol containing chewing gum centers, as the commercial goal of erythritol coating is for the total coated confectionary product to be non-cariogenic and non-laxative. Run 1 used center C (sorbitol), run 2 used center B (erythritol and inulin), run 3 used center C (sorbitol), and run 4 used center A (erythritol). Sorbitol makes a firmer gum center than erythritol.

Table 2: Center Chewing Gum Formulas: Runs A - C

**Table 2 - Chewing Gum Center Formulas - A-C**

| Examples/Runs (wt. % of gum) | A | B | C |
|---|---|---|---|
| Erythritol | 47% | 40% | 0 |
| Inulin | 0 | 7% | 0 |
| Sorbitol | 0 | 0 | 47% |
| Gum base | 33% | 33% | 31% |
| Calcium carbonate | 16% | 16% | 14% |
| Flavors, colors, sensates, and high intensity sweeteners | 4% | 4% | 4% |
| Glycerin | 0 | 0% | 3% |
| Water | 0 | 0% | 1% |

The chewing gum centers were produced by combining the ingredients listed in Table 2 in a mixer preheated to about 45 to about 55 °C. After thorough mixing, the gum was then sheeted and cut.

The coating process for each of these samples was a pan coating process, whereby coating layers were added to the confectionary gum center. The xylitol coating was produced by combining and cooking the first syrup ingredients at the temperature and to the Brix (as measured by a hand held refractometer) listed in Table 1. Then the first syrup was applied to the center surface in sub-batch aliquots, with drying of the surface after each aliquot addition. Then the second syrup was produced by combining and cooking the second syrup ingredients at the temperature and to the Brix (as measured by a hand held refractometer) listed in Table 1. Finally, the second syrup was applied to the center surface in sub-batch aliquots, with drying of the surface after each aliquot addition.

The maltitol coating was produced by combining and cooking the first syrup ingredients at the temperature and to the Brix (as measured by a hand held refractometer) listed in Table 1. Then the first syrup was applied to the center surface in sub-batch aliquots, with dry maltitol powder added to the wet surface after each of the first third to half of the first syrup addition. The surface was dried after each aliquot addition or aliquot and powder addition. Then the second syrup was produced by combining and cooking the second syrup ingredients at the temperature and to the Brix (as measured by a hand held refractometer) listed in Table 1. Finally, the second syrup was applied to the center surface in sub-batch aliquots, with drying of the surface after each aliquot addition.

The erythritol coating was produced by a similar process to that of xylitol and maltitol, with several significant differences. The first process step was to produce a hydrated inulin solution. This inulin solution was produced by mixing the inulin with very high sheer in water at an elevated temperature. Then the first erythritol syrup was made by combining and cooking the first syrup ingredients (including inulin solution) at the temperature and to the Brix (as measured by a hand held refractometer) listed in Table 1. Note that the syrup Brix was lower than that of the xylitol and maltitol syrups. Run 2 first syrup was also heated to a higher cook temperature. Then the first syrup was applied to the center surface in sub-batch aliquots, with dry erythritol powder added to the wet surface after each of the first third of the first syrup addition. The surface was dried after each aliquot addition or aliquot and powder addition. Then the second syrup was produced by combining and cooking the second syrup ingredients (including inulin solution) at the temperature and to the Brix (as measured by a hand held refractometer) listed in Table 1. Note that the syrup Brix was lower than that of the xylitol and maltitol syrups. Run 2 second syrup was also heated to a higher cook temperature. Finally, the second syrup was applied to the center surface in sub-batch aliquots, with drying of the surface after each aliquot addition.

Coated chewing gum samples of Runs 1 - 4 were exploratory sensory tested with results listed in Table 3.

**Table 3 - Sensory Test Data**

| Examples/Runs | 1 | 2 | 3 | 4 |
|---|---|---|---|---|
| Crunch | 6.6 | 7.7 | 4.9 | 7.1 |
| Hardness | 6.8 | 5.9 | 6.3 | 6.3 |

Samples were evaluated by 5 - 9 people in a blind, random order sensory evaluation using a 7 point scale (1: very little, 7: very much).

Table 3 shows that the two erythritol samples were scored as having more crunch than that of the maltitol or the xylitol samples. One of the erythritol runs tested as hard as that of the xylitol sample, with the second erythritol run testing as slightly less hard. The maltitol sample tested as harder than any of the other samples.

Coated chewing samples of Runs 1 - 4 were consumer tested with results listed in Table 4.

**Table 4 - Consumer Test Data - Runs 1 - 4**

| Examples/Runs | 1(A) | 2(B) | 3(C) | 4(D) |
|---|---|---|---|---|
| Crunchiness | 6.35 CD | 6.26 CD | 5.58 | 5.94C |
| Crunchiness Liking | 7.13 C | 7.26aC | 6.91 | 7.26aC |
| Texture/Firmness (1 min chew) | 5.38 | 5.80ACD | 5.24 | 5.53C |
| Overall Texture Liking | 5.00C | 4.64C | 4.95 | 5.08C |

The consumer sensory test format used to evaluate these runs was a sequential monadic complete block design. Sample size was N=80. All products were seen by all consumers one after another. Serving order was rotated and balanced. All consumers were asked the questions 1) how crunchy is this product?, 2) how much do you like the crunchiness of this product?, 3) after 1 minute of chewing, how firm is this product?, and 4) after 12 minutes of chewing, how much do you like the overall firmness of this product?. The data in the table show the percentage of the overall consumers who answered the question with at least a 1) extremely effective or 2) very effective response. Capital letters indicate significant difference between samples at a 95% confidence. Lower case letters indicate significant difference between samples at a 90% confidence.

The consumer results showed that one erythritol coated product (run 2) was significantly firmer than the other three samples tested. The other erythritol coated sample (run 4) was significantly firmer than the xylitol coated product. The consumer results also showed that both erythritol samples were significantly crunchier than the xylitol sample. One erythritol sample (run 2) was directionally less crunchy than that of the maltitol sample in crunchiness. Both erythritol samples had crunchiness liking scores significantly greater than that of the xylitol sample. One erythritol sample (run 2) was directionally crunchier than the maltitol coating.

As the maltitol and xylitol coatings are considered to be acceptable coatings to consumers in the market, the consumer and exploratory sensory test data show that the erythritol coating formula and process of this invention produce commercially acceptable product in terms of hardness and crunchiness. As discussed above, erythritol could not make a commercially acceptable hard and crunchy coating when substituted for maltitol in the above maltitol formula and process. Additionally, the process used to make these erythritol coatings did not clog pipes or spray nozzles.

Coated chewing gums with coatings containing erythritol, gum tahla, and inulin: formulas for runs 5, 6, 7, 10, and 11 are listed in Table 5.

**Table 5 - Coated Chewing Gums with Erythritol Coating Formulations: Runs 5, 6, 7, 10, 11**

| Examples/Runs | 5 | 6 | 7 | 10 | 11 |
|---|---|---|---|---|---|
| **Syrup One** | | | | | |
| Ingredients (dry solids wt.% of the syrup): | | | | | |
| Erythritol | 80.3 | 78.7 | 78.7 | 78.9 | 78.9 |
| Gum tahla | 10.4 | 12.2 | 12.2 | 12.2 | 12.2 |
| Inulin | 7.8 | 7.6 | 7.6 | 7.6 | 7.6 |
| | | | | | |
| Dry powder erythritol (dry solids wt. % of the full coating) | 2.7 | 2.7 | 2.7 | 2.7 | |
| Physical Characteristics: | | | | | |
| Brix | 64 | 64 | 64 | 64 | 64 |
| Temperature (°C) | 85 | 75 | 75 | 85 | 85 |
| | | | | | |

| **Syrup Two** | | | | | |
|---|---|---|---|---|---|
| Ingredients (dry solids wt.% of the syrup): | | | | | |
| Erythritol | 78.9 | 79.5 | 79.5 | 79.5 | 79.5 |
| Gum tahla | 10.9 | 10.6 | 10.8 | 10.6 | 10.6 |
| Inulin | 8.2 | 8 | 8 | 8.0 | 8.0 |
| | | | | | |
| Physical characteristics: | | | | | |
| Brix | 60 | 60 | 60 | 60 | 60 |
| Temperature (°C) | 85 | 75 | 75 | 85 | 85 |
| | | | | | |
| Gum Center Type: | B | A | A | A | C |

The product runs of Table 5 were made under the same processes and formula general ingredients of the product runs of Table 1. The gum center formulas used for the product runs of Table 5 are given in Table 2.

Coated chewing gums with coatings containing erythritol, gum tahla, and inulin: exploratory sensory test date for runs 5, 6, 7, 10 and 11 are listed in Table 6.

**Table 6 - Exploratory Sensory Testing - Runs 5, 6, 7, 10 and 11.**

| Examples/Runs | 5 | 6 | 7 | 10 | 11 |
|---|---|---|---|---|---|
| Crunchiness | 7.7 | 7.1 | 7.1 | 7.0 | 4.3 |
| Hardness/Firmness | 5.9 | 6.3 | 6.3 | 6.5 | 6.0 |

Samples were evaluated by 5 - 9 people in a blind, random order sensory evaluation using a 7 point scale (1: very little, 7: very much).

Table 6 gives test data for runs 5 and 6. These batches were made to test the repeatability of the exploratory sensory testing procedure. Both sample runs gave the same exploratory sensory test results. Both runs had the same coating formulas, coating process, and same chewing gum centers. Their crunchiness value was 7.1 and their hardness/firmness value was 6.3. Run 5 had a higher crunchiness value than runs 6 or 7 at 7.7. Run 5 had less gum tahla, more inulin, and higher cook temperatures than runs 6 or 7. The lower hardness/texture value for run 5 could be due to the gum center being different than that for runs 6 or 7. As hardness/firmness is a measure of the texture perceived during the first minute of chewing, the texture of the gum center can affect the hardness perceived of the coating.

Table 6 shows run 10 had a slightly lesser crunch and a harder texture than runs 6 or 7. Run 10 and runs 6 and 7 had the same inulin and gum tahla amounts, but run 10 has a higher syrup cook temperature than runs 6 and 7. Runs 10, 6, and 7 had the same gum centers, so there is no affect of the centers on the perceived coating hardness values. The higher syrup temperature created a harder coating with a slight reduction in brittleness, so less crunchiness.

Table 6 shows run 11 had a much lesser crunch than runs 6 and 7, and yet was still hard, though not as hard as runs 6 and 7. Run 11 had no dry erythritol addition during the application of the first syrup, which is why it had a much lesser crunch value. The gum center for run 11 was a sorbitol gum center, which is a firmer gum than an erythritol containing gum center. The hardness of the center is reflected in the hardness/firmness sensory value, even though the crunch value for that coating was low.

Surprisingly a synergy was found between erythritol, inulin, and gum tahla when these ingredients are at certain concentrations and when used at certain syrup Brix at certain syrup temperatures.

Coated chewing gums with coatings containing erythritol, clay, and calcium carbonate: coating formulas for runs 6, 13, 14, and 15 are listed in Table 7.

**Table 7 - Coated Chewing Gums with Erythritol Coating Formulations**

| Examples/Runs | 6 | 13 | 14 | 15 |
|---|---|---|---|---|
| **Syrup One** | | | | |
| Ingredients (dry solids wt.% of the syrup): | | | | |
| Erythritol | 78.7 | 77.2 | 83.9 | 73.4 |
| Gum tahla | 12.2 | 12.1 | 10.5 | 11.1 |
| Inulin | 7.6 | 7.6 | 2.62 | 7.6 |
| Clay | | 1.6 | 1.3 | |
| Calcium Carbonate | | | | 6.3 |
| | | | | |
| Dry powder erythritol (dry solids wt. % of the full coating) | 2.7 | 2.7 | 0.72 | 2.7 |
| | | | | |
| Physical characteristics: | | | | |
| Brix | 64 | 64 | 64 | 64 |
| Temperature | 85 | 85 | 85 | 85 |
| | | | | |

| **Syrup Two** | | | | |
|---|---|---|---|---|
| Ingredients (dry solids wt. % of the syrup): | | | | |
| Erythritol | 79.5 | 80.8 | 83.3 | 79.5 |
| Gum tahla | 10.6 | 12.7 | 8.3 | 13.3 |
| Inulin | 8 | 8.0 | 5.56 | 8.0 |
| Clay | | | 0.69 | |
| | | | | |
| Physical characteristics: | | | | |
| Brix | 60 | 60 | 60 | 60 |
| Temperature | 85 | 85 | 85 | 85 |
| | | | | |
| Gum Center Type: | A | A | A | A |

The product runs of Table 7 were made under the same processes and formula general ingredients of the product runs of Table 1. The gum center formulas used for the product runs of Table 7 are given in Table 2.

Coated chewing gums with coatings containing erythritol, clay, and calcium carbonate: exploratory sensory test date for runs 6, 13, 14, and 15 are listed in Table 8.

**Table 8 - Exploratory Sensory Test Data - Runs 6, 13, 14 and 15**

| Examples/Runs | 6 | 13 | 14 | 15 |
|---|---|---|---|---|
| Crunchiness | 7.1 | 5.8 | 5.7 | 6.0 |
| Hardness/Firmness | 6.3 | 6.8 | 5.0 | 6.6 |

Samples were evaluated by 5 - 9 people in a blind, random order sensory evaluation using a 7 point scale (1: very little, 7: very much).

Table 8 shows that a harder perceived coating is not necessarily a crunchier coating. Runs 6, 13, 14 and 15 all had the same gum centers, so all products had the same affect of the gum center on the perceived hardness of the coatings. Run 15 had a lower crunchiness data value and a higher hardness value than run 6, due to a combination of more gum tahla in the second syrup and a higher syrup temperature than run 6, along with an addition of calcium carbonate in the first syrup. The coating of run 15 became harder than that of run 6, but with a lesser crunchiness. Run 13 had the hardest coating value of these samples, yet the crunchiness value of run 13 was much less than that of run 6. Again, the addition of more gum acacia in the second syrup, a higher syrup temperature, along with an addition of clay in the first syrup produced a harder coating than run 6 but a less brittle, so less crunchy.

These samples illustrate that higher gum tahla and addition of anticrystallizing agents such as clay and calcium carbonate may make a hard coating, but not hard and crunchy coatings of the present invention.

## Claims

1. A confectionary product comprising a confectionery center coated with a coating formed from erythritol, inulin and a film forming agent, wherein the amount of erythritol in the coating is 65-95 dry solids wt.% and wherein the amount of inulin in the coating is 3-13 dry solids wt.%.

2. A confectionary product according to claim 1 having a confectionary coating comprising:
a) a first section comprising 75 to 90 dry solids wt. % erythritol, 9 to 14 dry solids wt. % inulin, and 9 to 14 dry solids wt. % film forming agent; and
b) a second section comprising 75 to 90 dry solids wt. % erythritol, 6 to 10 dry solids wt. % inulin, and 7 to 13 dry solids wt. % film forming agent;
wherein the first and second sections are different.

3. A confectionary product of any of the above claims in which the film forming agent is gum tahla.

4. A confectionary product of claim 1 or 2 in which the amount of erythritol in the coating is 70 to 90 dry solids wt. %.

5. A confectionary product of claims 1 or 2 in which the amount of inulin in the coating is 4 to 12 dry solids wt. %.

6. A confectionary product of claim 3 in which the amount of gum tahla in the coating is 6 to 15 dry solids wt %, preferably 9 to 13 dry solids wt. %.

7. A confectionary product of any preceding claim in which the confectionary coating is formed from at least two application syrups with different coating compositions.

8. A method of making a coated confectionary product as claimed in any preceding claim, comprising
a) applying a first syrup to a confectionary center comprising erythritol and inulin having a Brix of 60 to 68 at a temperature of 70 to 90 °C; and
b) applying a second syrup comprising erythritol and inulin with a Brix of 58 to 65 at a temperature of 70 to 90 °C to the confectionary center wherein the first and second syrups are different.

9. A method of claim 8 in which the first syrup comprises 75 to 90 dry solids wt. % erythritol and 9 to 14 dry solids wt. % inulin.

10. A method of claim 8 in which the second syrup comprises 75 to 90 dry solids wt. % erythritol and 6 to 10 dry solids wt. % inulin.

11. A method of claims 8 to 10 further comprising addition of erythritol powder during the application of the first syrup.

12. A method of claim 11 in which the amount of erythritol is 2 to 5 dry solids wt. % of the coating.

13. A method of claim 8 to 12 in which the first syrup further comprises 9 to 14 dry solids wt. % gum tahla.

14. A method of claim 8 to 13 in which the second syrup further comprises 7 to 13 dry solids wt. % gum tahla.

## Patentansprüche

1. Süßwarenprodukt, umfassend ein Zentrum der Süßware, das mit einem Überzug überzogen ist, der aus Erythrit, Inulin und einem Filmbildner gebildet ist, wobei die Menge an Erythrit in dem Überzug 65 bis 95 Gew.-% der trockenen Feststoffe beträgt, und wobei die Menge an Inulin in dem Überzug 3 bis 13 Gew.-% der trockenen Feststoffe beträgt.

2. Süßwarenprodukt nach Anspruch 1, welches einen Süßwarenüberzug aufweist, umfassend:
a) einen ersten Abschnitt, umfassend 75 bis 90 Gew.-% der trockenen Feststoffe an Erythrit, 9 bis 14 Gew.-% der trockenen Feststoffe an Inulin und 9 bis 14 Gew.-% der trockenen Feststoffe an Filmbildner; und
b) einen zweiten Abschnitt, umfassend 75 bis 90 Gew.-% der trockenen Feststoffe an Erythrit, 6 bis 10 Gew.-% der trockenen Feststoffe an Inulin und 7 bis 13 Gew.-% der trockenen Feststoffe an Filmbildner;
wobei der erste und zweite Abschnitt unterschiedlich sind.

3. Süßwarenprodukt nach einem der vorstehenden Ansprüche, wobei der Filmbildner Talha-Gummi ist.

4. Süßwarenprodukt nach Anspruch 1 oder 2, wobei die Menge an Erythrit in dem Überzug 70 bis 90 Gew.-% der trockenen Feststoffe beträgt.

5. Süßwarenprodukt nach Anspruch 1 oder 2, wobei die Menge an Inulin in dem Überzug 4 bis 12 Gew.-% der trockenen Feststoffe beträgt.

6. Süßwarenprodukt nach Anspruch 3, wobei die Menge an Talha-Gummi in dem Überzug 6 bis 15 Gew.-% der trockenen Feststoffe, vorzugsweise 9 bis 13 Gew.-% der trockenen Feststoffe, beträgt.

7. Süßwarenprodukt nach einem der vorstehenden Ansprüche, wobei der Süßwarenüberzug aus mindestens zwei Auftragsirupen mit unterschiedlichen Überzugszusammensetzungen gebildet ist.

8. Verfahren zur Herstellung eines überzogenen Süßwarenprodukts nach einem der vorstehenden Ansprüche, umfassend:
a) Auftragen eines ersten Sirups auf ein Zentrum der Süßware, der Erythrit und Inulin umfasst, mit einem Brix-Wert von 60 bis 68 bei einer Temperatur von 70 bis 90 °C; und
b) Auftragen eines zweiten Sirups, der Erythrit und Inulin umfasst, mit einem Brix-Wert von 58 bis 65 bei einer Temperatur von 70 bis 90 °C auf das Zentrum der Süßware, wobei der erste und zweite Sirup unterschiedlich sind.

9. Verfahren nach Anspruch 8, wobei der erste Sirup 75 bis 90 Gew.-% der trockenen Feststoffe an Erythrit und 9 bis 14 Gew.-% der trockenen Feststoffe an Inulin umfasst.

10. Verfahren nach Anspruch 8, wobei der erste Sirup 75 bis 90 Gew.-% der trockenen Feststoffe an Erythrit und 6 bis 10 Gew.-% der trockenen Feststoffe an Inulin umfasst.

11. Verfahren nach den Ansprüchen 8 bis 10, weiter umfassend den Zusatz von Erythrit-Pulver während des Auftragens des ersten Sirups.

12. Verfahren nach Anspruch 11, wobei die Menge an Erythrit 2 bis 5 Gew.-% der trockenen Feststoffe des Überzugs beträgt.

13. Verfahren nach Anspruch 8 bis 12, wobei der erste Sirup weiter 9 bis 14 Gew.-% der trockenen Feststoffe an Talha-Gummi umfasst.

14. Verfahren nach Anspruch 8 bis 13, wobei der zweite Sirup weiter 7 bis 13 Gew.-% der trockenen Feststoffe an Talha-Gummi umfasst.

## Revendications

1. Produit de confiserie comprenant un noyau de confiserie enrobé d'un enrobage formé d'érythritol, d'inuline et d'un agent filmogène, dans lequel la quantité d'érythritol dans l'enrobage est de 65 à 95 % en poids de solides secs et dans laquelle la quantité d'inuline dans l'enrobage est de 3 à 13 % en poids de solides secs.

2. Produit de confiserie selon la revendication 1 ayant un enrobage de confiserie comprenant :
a) une première section comprenant 75 à 90 % en poids de solides secs d'érythritol, 9 à 14 % en poids de solides secs d'inuline et 9 à 14 % en poids de solides secs d'agent filmogène ; et
b) une seconde section comprenant 75 à 90 % en poids de solides secs d'érythritol, 6 à 10 % en poids de solides secs d'inuline et 7 à 13 % en poids de solides secs d'agent filmogène ;
dans lequel les première et seconde sections sont différentes.

3. Produit de confiserie selon l'une quelconque des revendications précédentes, dans lequel l'agent filmogène est de la gomme tahla.

4. Produit de confiserie selon la revendication 1 ou 2, dans laquelle la quantité d'érythritol dans l'enrobage est de 70 à 90 % en poids de solides secs.

5. Produit de confiserie selon les revendications 1 ou 2, dans lequel la quantité d'inuline dans l'enrobage est de 4 à 12 % en poids de solides secs.

6. Produit de confiserie selon la revendication 3, dans lequel la quantité de gomme tahla dans l'enrobage est de 6 à 15 % en poids de solides secs, de préférence de 9 à 13 % en poids de solides secs.

7. Produit de confiserie selon l'une quelconque des revendications précédentes, dans lequel l'enrobage de confiserie est formé à partir d'au moins deux sirops d'application avec des compositions d'enrobage différentes.

8. Procédé de fabrication d'un produit de confiserie enrobé selon l'une quelconque des revendications précédentes, comprenant
a) l'application d'un premier sirop à un noyau de confiserie comprenant de l'érythritol et de l'inuline ayant un Brix de 60 à 68 à une température de 70 à 90 °C ; et
b) l'application d'un second sirop comprenant de l'érythritol et de l'inuline avec un Brix de 58 à 65 à une température de 70 à 90 °C au noyau de confiserie
dans lequel les premier et second sirops sont différents.

9. Procédé selon la revendication 8, dans lequel le premier sirop comprend de 75 à 90 % en poids de solides secs d'érythritol et 9 à 14 % en poids de solides secs d'inuline.

10. Procédé selon la revendication 8, dans lequel le second sirop comprend 75 à 90 % en poids de solides secs d'érythritol et de 6 à 10 % en poids de solides secs d'inuline.

11. Procédé selon les revendications 8 à 10, comprenant en outre l'ajout de poudre d'érythritol pendant l'application du premier sirop.

12. Procédé selon la revendication 11, dans lequel la quantité d'érythritol est de 2 à 5 % en poids de solides secs de l'enrobage.

13. Procédé selon la revendication 8 à 12, dans lequel le premier sirop comprend en outre 9 à 14 % en poids de solides secs de gomme tahla.

14. Procédé selon la revendication 8 à 13, dans lequel le second sirop comprend en outre de 7 à 13 % en poids de solides secs de gomme tahla.
